# EUROPEAN PATENT SPECIFICATION

(11) **EP 3 762 277 B1**
(45) Date of publication and mention of the grant of the patent: **07.06.2023**
(21) Application number: 19721017.2
(22) Date of filing: 07.03.2019
(51) Int. Cl.: B62D 9/02, B62K 5/027, B62K 5/05, B62K 5/08, B62K 5/10, B60G 3/10, B60G 7/02, B60G 21/05, B62K 5/00

(54) **FORECARRIAGE FOR TILTING MOTORVEHICLES WITH TWO FRONT WHEELS AND RELATED TILTING VEHICLE**
VORGESTELL VON KIPPBAREN KRAFTFAHRZEUGEN MIT ZWEI VORDERRÄDERN UND ZUGEHÖRIGES KIPPFAHRZEUG
AVANT-TRAIN POUR VÉHICULES À MOTEUR INCLINABLES AYANT DEUX ROUES AVANT ET VÉHICULE INCLINABLE ASSOCIÉ

(30) Priority: 08.03.2018 IT 201800003366
(43) Date of publication of application: 13.01.2021
(73) Proprietor: Piaggio & C. S.P.A., 56025 Pontedera Pisa (IT)
(72) Inventor: DI TANNA, Onorino, 56025 Pontedera (Pisa) (IT); BARTOLOZZI, Stefano, 56025 Pontedera (Pisa) (IT)
(74) Representative: Carangelo, Pierluigi
(86) International application number: PCT/IB2019/051840
(87) International publication number: WO 2019/171313

(56) References cited:
- EP-A2- 3 059 151
- WO-A1-01/92084
- DE-A1- 4 444 115
- US-A- 2 968 492
- US-B1- 7 487 985
- US-B1- 8 070 172

## Description

### TECHNOLOGICAL FIELD

The present invention relates to the field of three- or four-wheel tilting or rolling vehicles with two front wheels.

The present invention specifically relates to rolling scooters or motorvehicles with two front wheels capable of being inclined together with the vehicle like traditional two-wheel in-line motorvehicles.

### BACKGROUND ART

Various architectures are known of the so-called articulated rolling quadrilateral, i.e. of the oscillating kinematic mechanism capable of allowing two front wheels to roll together with the frame without coming off the ground.

Traditionally, the articulated rolling quadrilateral comprises an oscillating kinematic mechanism with at least one upper crossbeam, at least one lower crossbeam, two lateral uprights connected to the front wheels, and a central body jointed in inclination and steering with respect to the frame and controlled by the handle of the vehicle.

An example of this type of rolling quadrilateral is disclosed in Patent Application WO2001092084.

This rolling quadrilateral has two upper crossbeams hinged to each other and to a central block with coinciding rotation axes. Two lower crossbeams are also hinged to the central body, they also with coinciding rotation axes.

Said upper and lower crossbeams are hinged to right-hand and left-hand uprights so that an upright, an upper crossbeam, the central block and a lower crossbeam form an articulated rolling quadrilateral. The two right-hand and left-hand articulated quadrilaterals together form the kinematic rolling mechanism of the vehicle. The rolling axes of the two quadrilaterals are parallel to each other.

In order to allow the steering, the spindles of the front wheels are hinged to the uprights with axes which substantially are perpendicular to the ground. Said spindles are controlled in rotation to steer the front wheels by means of steering rods connected to the vehicle steering.

In order for the kinematic steering mechanism of the vehicle not to interfere with the upper crossbeams of this vehicle, it is required for the steering rods and the steering tube to be arranged in retracted (or advanced) manner with respect to the kinematic rolling mechanism, thus generating a significant longitudinal volume.

With reference to the solution of Application WO2001092084, the central rolling axes of the upper crossbeams and the steering axis cross each other because they lie on the plane and in order to avoid construction restraints, the solutions of the prior art have always arranged the kinematic rolling mechanism in front of the steering kinematic mechanism. US 7 487 985 B1 shows a forecarriage according to the preamble of claim 1.

For this reason, the solutions known in the prior art relate to vehicles with two front wheels with kinematic rolling and steering mechanisms which are not very compact and accordingly, have large sizes.

### SUMMARY

The aforesaid drawbacks of the prior art are now resolved by the first object of the present invention, namely a forecarriage for a tilting motorvehicle with two front wheels, comprising an articulated kinematic rolling mechanism. Said articulated kinematic rolling mechanism comprising:
- a central block extending in an up-down direction and which is connectible to the frame of the motorvehicle;
- a first and second lateral uprights, each one extending in an up-down direction and being mechanically connected to the spindle of respective front wheels;
- a first and second lower transversal arms, each one rotatably connected to the central block in first connection points and to said lateral uprights in second connection points, respectively;
- a first and second upper transversal arms, each one rotatably connected to the central block in third connection points and to said lateral uprights in fourth connection points, respectively;

the distance between said first connection points and said third connection points being substantially equal to the distance between said second connection points and said fourth connection points;
the distance between said first connection points and said second connection points being substantially equal to the distance between said third connection points and said fourth connection points;
said first lower transversal arm, said first lateral upright, said first upper transversal arm and said central block forming a first articulated parallelogram, and said second lower transversal arm, said second lateral upright, said second upper transversal arm and said central block forming a second articulated parallelogram;
in which said first connection points are axially aligned and said third connection points are staggered from one another and are staggered with respect to a central up-down plane so that said articulated parallelograms cross one another at least in part in each operating position of the articulated kinematic rolling mechanism.

The fact that the articulated parallelograms cross one another at least in part means that at least a portion of the first articulated parallelogram overlaps, and therefore lies inside, the second articulated parallelogram, when looked at from the front.

This type of forecarriage of motorcycle allows the volumes of the kinematic rolling mechanism to be significantly contained.

In particular, said third connection points may be arranged on the opposite side of the central up-down plane with respect to the lateral upright to which they are connected through said upper transversal arms. In particular, said steering tube crosses a plane on which both rotating axes of said third connection points lie.

This type of forecarriage also allows moving the upper connection hinges of the upper transversal arms to the lateral uprights towards the central up-down plane of the vehicle, thus allowing an interference to be avoided of the upright with the disc brake caliper and/or with the brake itself of one of the front wheels in steering step. By doing this, the steering angle may be increased under all inclination and compression conditions of the suspension, while keeping volumes reduced and moving the steering axis close to the centerline of the tire.

Particularly, the steering tube may be rotatably connected to the central block so as to rotate about a steering axis. This allows a very compact central body to be made which is capable of housing both hinges of the upper transversal arms and the steering tube.

The forecarriage further comprises a shock absorber system connected to both said lower or upper transversal arms and provided with at least one shock absorber.

Said shock absorber system may further comprise a crossbeam rotatably connected to the central block and to a couple of shock absorbers, each one comprising an elastic element and a damper. Said shock absorbers are rotatably connected with the lower ends thereof to said lower or upper transversal arms. This solution allows a more wide range to be had of the shock absorbers, and therefore a better dynamic behavior of the vehicle, especially in case of uneven ground.

Alternatively, said shock absorber system may comprise a single shock absorber having a spring and a damper, the shock absorber being rotatably connected to said lower or upper transversal arms.

Thereby, the damped kinematic rolling mechanism is highly compact as a whole.

In particular, both spindles are rotatably connected to the lateral uprights about respective rolling axes so as to allow a more efficient steering. The uprights are kinetically connected to the other elements of the articulated parallelograms but are incapable of steering. Only the spindles, together with the front wheels connected thereto, rotate with respect to swerve axes, therefore allowing a lightening of the elements designated to steer the vehicle.

Said spindles are then rotatably connected to rods in turn rotatably connected to an arm of the steering tube through dual hinges. This allows a kinematic coupling to be obtained without excessive friction and capable of ensuring a continuous operation. The rotation axes of said first, second, third and fourth rotary connection points are parallel to one another and in turn substantially are parallel to the ground to allow an optimal dynamic of the articulated parallelograms.

The term substantially parallel to the ground means that the axes of said rotatably connection points may have an inclination up to +/- 20° with respect to the direction parallel to the ground.

It is a further object of the present invention to provide a motorvehicle comprising a forecarriage as described above.

### DESCRIPTION OF THE DRAWINGS

A more complete appreciation of the embodiments of the invention and the related associated advantages will be apparent from the detailed disclosure, to be considered in connection with the accompanying drawings in which:
Figure 1 shows a front view of a forecarriage according to the present invention, without wheels, when the forecarriage is in resting position;
Figure 2 shows a front view of a forecarriage according to the present invention, without wheels, when the forecarriage is inclined with respect to the ground;
Figure 3 shows an axonometric view of the forecarriage in Figure 1, cross-sectioned according to a plane parallel to the ground and passing through the rolling hinges of the upper transversal arms;
Figure 4 shows an axonometric view of the forecarriage in Figure 1;
Figure 5 shows an axonometric view of the forecarriage in Figure 1, cross-sectioned according to a longitudinal plane passing through the steering axis;
Figure 6 shows an axonometric view of a vehicle devoid of handle and comprising a forecarriage according to the present invention.

### DETAILED DESCRIPTION

The following description of one or more embodiments of the invention relates to the accompanying drawings. The same numerals in the drawings identify equal or similar elements. The drawings are not necessarily depicted to scale. Moreover, the following detailed description should not be considered limiting to the invention itself. The object of the invention is defined by the appended claims. The technical details, structures or features of the solutions hereinafter described may be combined with one another in any manner.

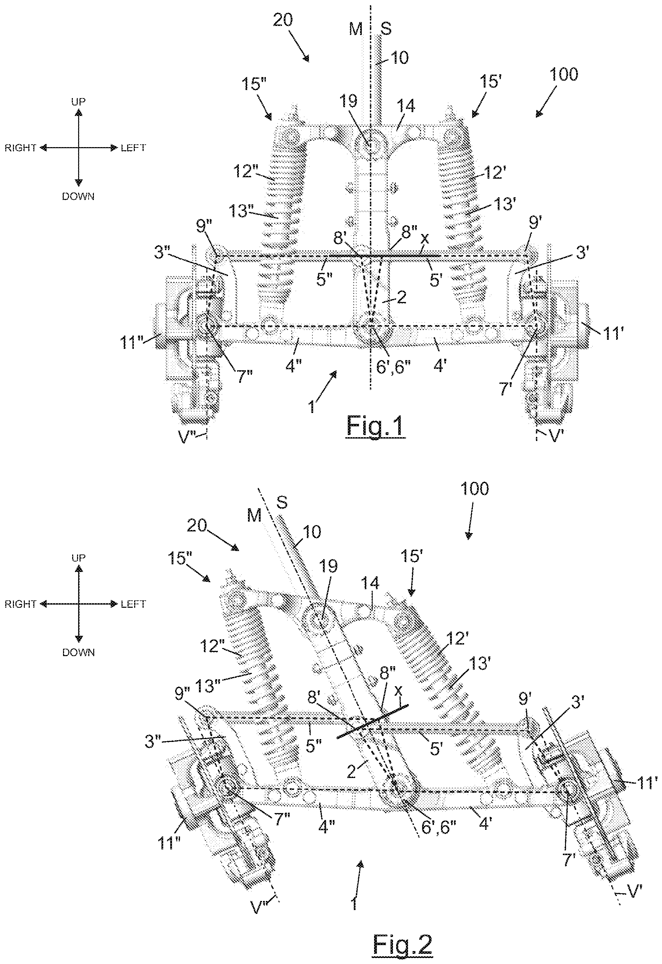

Figures 1, 2, 3, 4 and 5 depict a forecarriage 100 for motorcycles having two steered and tilting or rolling front wheels.

In particular, figures 1 and 2 depict a forecarriage 100 comprising an articulated kinematic rolling mechanism 1, which in turn comprises two articulated parallelograms depicted with dotted lines. Each one of these articulated parallelograms comprises two first components, i.e. a first couple of sides of the parallelogram having equal length, and two second components, i.e. a second couple of sides of the parallelogram also having equal length. To ensure uniformity of the rolling movement, the opposite elements of the articulated parallelogram have substantially equal length and substantially are parallel to one another.

Specifically, the components of the articulated kinematic mechanism are the central block 2, a first lateral upright 3', a second lateral upright 3", a first lower transversal arm 4', a second lower transversal arm 4", a first upper transversal arm 5', a second upper transversal arm 5".

The aforesaid components are connected to one another by means of connection points which may in particular be hinges. Said hinges are preferably arranged at the end of the transversal arms. Therefore, terminal portions of the transversal arms comprise rotary connections with the central block and the lateral uprights.

In particular, the first lower transversal arm 4' is connected, with a first end thereof, to the central block 2 by means of first connection points 6', and with an opposite end thereof, to the first lateral upright 3' in second connection points 7'.

Similarly, the second lower transversal arm 4" is connected, with a first end thereof, to the central block 2 by means of first connection points 6", and with an opposite end thereof, to the second lateral upright 3" in second connection points 7".

Also the first upper transversal arm 5' is connected, with a first end thereof, to the central block 2 by means of third connection points 8', and with an opposite end thereof, to the first lateral upright 3' in fourth connection points 9'.

In similar manner, the second upper transversal arm 5" is connected, with a first end thereof, to the central block 2 by means of third connection points 8", and with an opposite end thereof, to the second lateral upright 3" in fourth connection points 9". The distance between said first connection points 6', 6" and said third connection points 8', 8" substantially is equal to the distance between said second connection points 7', 7" and said fourth connection points 9', 9".

Similarly, the distance between said first connection points 6', 6" and said second connection points 7', 7" substantially is equal to the distance between said third connection points 8', 8" and said fourth connection points 9',9". The distance generally is the same and articulated parallelograms are discussed here. However, in a particular version of the forecarriage, the distances could be different to vary the inclination of one wheel with respect to the other during the rolling of the vehicle, and to distribute the loads on the front wheels in differentiated manner. An articulated quadrilateral and not an articulated parallelogram is discussed in this last case.

In particular, said first lower transversal arm 4', said first lateral upright 3', said first upper transversal arm 5' and said central block 2 form a first articulated parallelogram, while said second lower transversal arm 4", said second lateral upright 3", said second upper transversal arm 5" and said central block 2 form a second articulated parallelogram.

As already described, each articulated parallelogram has equal and parallel opposite sides.

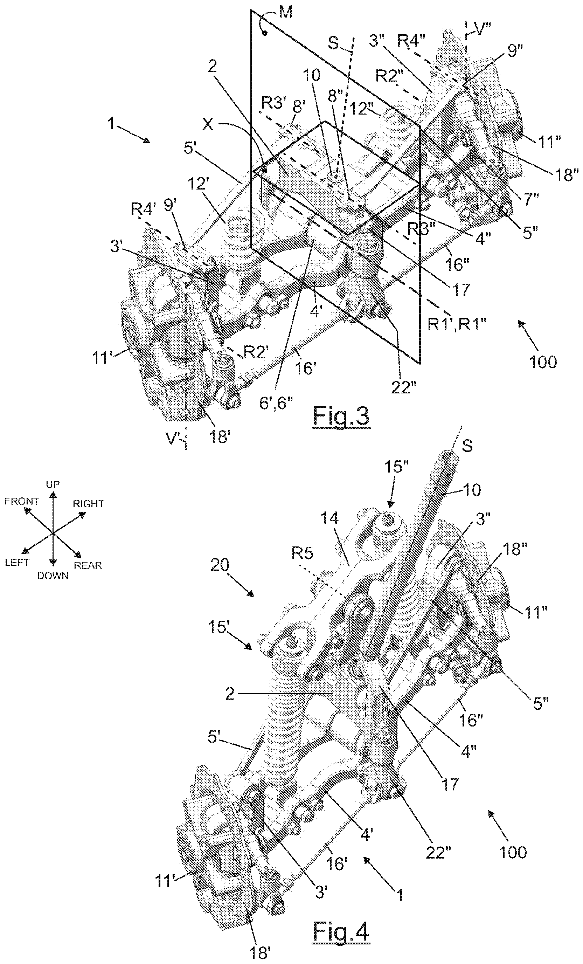

With particular reference to Figure 3, in order to minimize the overall sizes of the articulated kinematic mechanism 1, the first connection points 6', 6" are axially aligned, i.e. the rotation axes R1', R1" thereof are coinciding, while the third connection points 8', 8" are staggered from one another, i.e. the rotation axes R3', R3" thereof are parallel and not coinciding.

In particular, the third connection points 8', 8" are also staggered with respect to a central up-down plane M, i.e. they do not lie on said central up-down plane M.

Said central up-down plane M is the ideal plane passing through the middle of the vehicle, oriented longitudinally with respect thereto and perpendicular to the ground. Given that the vehicle substantially is symmetrical, said central up-down plane M may also mean the right-left symmetry plane.

Given that the third connection points 8', 8" are staggered from one another and with respect to a central up-down plane M, the above-described articulated parallelograms cross one another in each operating position of the articulated kinematic rolling mechanism 1.

With reference to Figure 1, the right-hand articulated parallelogram has the top left vertex which lies on the perimeter of the left-hand articulated parallelogram, while the areas thereof overlap. Vice versa, the left-hand articulated parallelogram has the top right vertex which lies on the perimeter of the right-hand articulated parallelogram. This crossing occurs in all operating positions of the articulated kinematic mechanism 1, as may be noted in Figure 2 where the forecarriage depicted is inclined and the top left vertex of the right-hand articulated parallelogram lies in the area of the left-hand articulated parallelogram.

Specifically, the third connection points 8', 8" are arranged on the opposite side of the central up-down plane M with respect to the lateral upright 3', 3" to which they are connected through said upper transversal arms 5', 5". To be clear, the first upper transversal arm 5' is connected to the central body 2 in a third connection point 8' which is on the same side, with respect to the central up-down plane M, as the second lateral upright 3". Likewise, the second upper transversal arm 5" is connected to the central body 2 in a third connection point 8" which is on the same side, with respect to the central up-down plane M, as the first lateral upright 3'. In essence, the first upper transversal arm 5', which in Figures 1 and 2 is to the right, has the connection hinge with the central body 2 to the left of the central up-down plane M. Contrarily, the second upper transversal arm 5", which in Figures 1 and 2 is to the left, has the connection hinge with the central body 2 to the right of the central up-down plane M.

In an alternative version (not shown), the third connection points 8', 8" could be arranged inversely, i.e. each one arranged towards its reference lateral upright with respect to the central up-down plane M.

All connection points 6', 6", 7', 7", 8', 8", 9', 9" have their own rotation axes R1', R1", R2', R2", R3', R3", R4', R4" which substantially are parallel to one another, net of any mechanical clearances. Said rotation axes R1', R1", R2', R2", R3', R3", R4', R4" moreover substantially are parallel to the ground to allow said rolling. As mentioned above, said rotation axes may have an inclination up to +/- 20° with respect to a direction parallel to the ground.

With particular reference to Figures 3, 4 and 5, the central body 2 is shaped so as to house both lower transversal arms 4', 4" so that the rotation axes R1', R1" thereof coincide.

Said central body is also shaped to house a steering tube 10 and allow a relative rotation thereof about a steering axis S. Said steering axis S lies on said central up-down plane M.

Since the third connection points 8', 8" are staggered with one another and are arranged on opposite sides of the central up-down plane M, plane X on which both rotation axes R3', R3" thereof lie is crossed by the steering tube 10.

If said rotation axes R3', R3" were not staggered with each other, said steering tube could not lie between the third connection points 8', 8" in the central body 2 with such reduced volumes. The third connection points 8', 8" and also the steering tube 10 are sized in terms of diameter so as not to interfere with one another.

Said central body 2 is further shaped to house a crossbeam 14 in rotation about a rotation axis R5, at a fifth connection point 19. The rotation axis R5 is parallel to the rotation axes R1', R1", R2', R2", R3', R3", R4', R4".

Said crossbeam 14 is connected, in a central area thereof, to the central body 2 so that the ends of crossbeam 14 lie to the right and to the left of the central up-down plane M, respectively.

Each of said ends of crossbeam 14 is rotatably connected to a couple of shock absorbers 15', 15". Each shock absorber 15', 15" comprises an elastic element 12', 12", e.g. a metal spring, and a damper 13', 13", e.g. a hydraulic damper.

Each one of these shock absorbers 15', 15" may be rotatably connected at the bottom to said lower transversal arms 4', 4", as shown in Figures 1 to 5, or to the upper transversal arms 5', 5" (version not shown). The connection with the lower or upper transversal arms may occur in any intermediate position between the connection points with the lateral uprights 3', 3" and with the central body 2.

The shock absorbers 15', 15" substantially are identical to each other, both dimensionally and for functional features, to avoid imbalances of the motorcycle. The shock absorbers 15', 15", together with crossbeam 14, form the shock absorber system 20.

In the version shown in Figures 1 to 5, the shock absorbers 15', 15" are connected in a substantially intermediate position to the lower transversal arms 4', 4" and are aligned to one another in right-left direction. The transversal arms 5', 5" lie one in front of the other behind the two shock absorbers 15', 15" so as to compact forecarriage 1 in longitudinal direction.

Alternatively, the shock absorber system 20 may comprise one shock absorber alone (not shown), the ends of which are rotatably connected to the lower transversal arms 4', 4" or to the upper transversal arms 5', 5". In this embodiment, the lower transversal arms 4', 4", or the upper ones 5', 5", have protrusions (not shown) to which the ends of a shock absorber are hinged. Also in this case, said shock absorber comprises a spring and a damper.

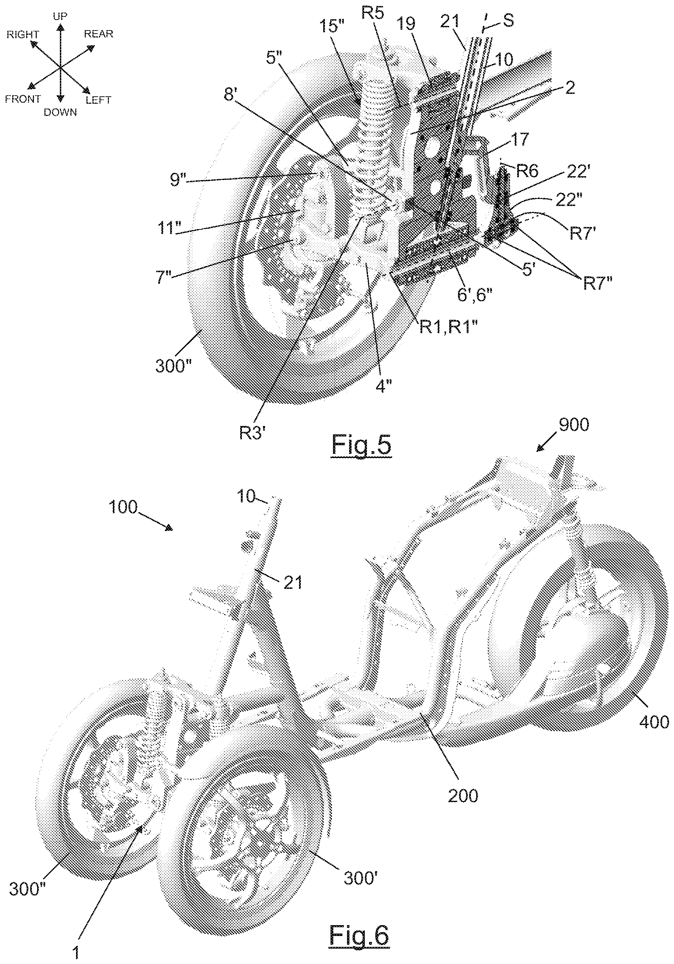

As shown in Figure 6, the front wheels 300', 300" are rotatably connected to spindles 11', 11", which are best shown in Figures 1 to 5. The term spindle 11', 11" in the present description means the assembly comprising the spindle and the hub holder.

Moreover, said spindles 11', 11" are rotatably connected, about respective swerve axes V', V", to the lateral uprights 3', 3". Looking at the forecarriage frontally, these swerve axes V', V" are always parallel to the steering axis S in all operating positions of the kinematic rolling mechanism 1. Thereby, the spindles 11', 11" are easily rotated also when the vehicle is inclined. Moreover, this forecarriage allows increased inclinations to be achieved with respect to the solutions of the prior art due to the inclination towards the central up-down plane M of the lateral uprights 3', 3". The actuation of the steering, from the steering tube 10 to the spindles 11', 11", occurs by means of rods 16', 16", which in turn are connected to an arm 17 of the steering tube 10.

In particular, a first rod 16' (shown in Figures 4 and 5) is rotatably connected at one end with a protrusion of spindle 11' and at the opposite end with a joint 22', which in turn is rotatably connected to arm 17 of the steering tube 10.

In the same way, a second rod 16" is rotatably connected to spindle 11" and to joint 22', which in turn is rotatably connected to arm 17 of the steering tube 10 or to joint 22'. Thus, joint 22' and joint 22" are free to rotate coaxially with respect to each other and both with respect to arm 17.

The joints 22' and 22" may rotate independently of each other. The rods 16' and 16" are connected to the spindles 11' and 11" and to arm 17 with two couples of independent orthogonal hinges. Each of the rods 16' and 16" may have a ball joint 23', 23" at the connection with the spindles 11' and 11" (as shown in Figures 3 and 4) so as to allow the rotation of the rod about its axis, i.e. the variation of the parallelism of the aforesaid hinges in the various steering, rolling and travel movement combinations of the suspension(s).

Alternatively to rotatably connections, i.e. dual orthogonal hinges in series with each other, ball joints or universal joints may be provided.

Each rotation of the steering tube 10 with respect to the head tube 21, which in turn is integrally connected to frame 200, is transmitted to the rods 16' and 16" by means of arm 17 and accordingly, to the spindles 11', 11", and therefore to the front wheels 300', 300".

With particular reference to Figure 6, a vehicle 900 is shown comprising a forecarriage 100 according to what is described above, comprehensive of two front wheels 300', 300" and a steering tube 10 coming out of the head tube 21.

The head tube 21 is integral with frame 200, which substantially extends in a front-back direction up to the rear wheel 400.

Vehicle 900 in Figure 6 does not have various elements typical of scooters, which however the expert in the field may easily obtain from the prior art to complete the vehicle without particular technical efforts. For example, the handle, body, saddle, motor, etc. are not shown.

The motorvehicle 900 may have three wheels, two front and a rear one, as shown in Figure 6, or alternatively may have four wheels, two front and two rear wheels (version not shown).

The aforesaid hinges or rotary connections may be made by means of radial or axial-radial bearings.

With reference to the above description, the term front or rear refers to the normal front-back extension of the vehicle, as also indicated in the drawings.

The terms tilting and rolling in the present description are used as synonyms to mean that the object to which reference is made is capable of being inclined laterally.

In conclusion, while the embodiments of the inventive object herein described are shown in the drawings and described in detail above, it is apparent to the expert in the field that the invention thus conceived is susceptible to several modifications or variants. Practically, the quantities may be varied according to technical needs. The elements, structures and instruments of the various embodiments may be combined with one another in a different manner. The invention is defined by the appended claims.

## Claims

1. Forecarriage (100) for tilting motorvehicle (900) with two front wheels comprising:
- an articulated kinematic rolling mechanism (1) comprising:
- a central block (2) extending in an up-down direction connectible to a frame (200) of the motorvehicle (900);
- a first and second lateral uprights (3',3") each one extending in an up-down direction and being mechanically connected to a spindle (11',11") of respective front wheels (300',300");
- a first and second lower transversal arms (4',4") each one rotatably connected respectively to the central block (2) in first connection points (6',6") and to said lateral uprights (3',3") in second connection points (7',7");
- a first and second upper transversal arms (5',5") each one rotatably connected respectively to the central block (2) in third connection points (8',8") and to said lateral uprights (3',3") in fourth connection points (9',9");
the distance between said first connection point (6',6") and said third connection points (8',8") being substantially equal to the distance between said second connection points (7',7") and said fourth connection points (9',9");
the distance between said first connection point (6',6") and said second connection points (7',7") being substantially equal to the distance between said third connection points (8',8") and said fourth connection points (9',9");
said first lower transversal arm (4'), said first lateral upright (3'), said first upper transversal arm (5') and said central block (2) forming a first articulated parallelogram and said second lower transversal arm (4"), said second lateral upright (3"), said second upper transversal arm (5") and said central block (2) forming a second articulated parallelogram;
a steering tube (10) rotatably connected, about a steering axis (S), to the central block (2), said steering axis (S) lying on a central up-down plane (M),
**characterised in that**
said first connection points (6',6") are axially aligned and said third connection points (8',8") are staggered each other and staggered with respect to said central up-down plane (M) so that said articulated parallelograms cross each other at least in part in each operating position of the articulated kinematic rolling mechanism (1) and so that the steering tube (10) is arranged between said third connection points (8',8").

2. Forecarriage (100) according to claim 1, wherein said third connection points (8',8") are arranged to opposite sides of the central up-down plane (M) with respect to the lateral upright (3',3") to which they are connected through said upper transversal arms (5',5").
rotatably

3. Forecarriage (100) according to claim 1 or 2, further comprising a shock absorber system (20) connected to both said lower transversal arms (4',4") or to both said upper transversal arms (5',5"), comprising at least a shock absorber.

4. Forecarriage (100) according to claim 3, wherein said shock absorber system (20) further comprises a crossbeam (14) rotatably connected to a central block (2) and to a couple of shock absorbers (15',15"), each one of said shock absorbers (15',15") comprising an elastic element (12',12") and a damper (13',13") and being rotatably connected at the bottom to said lower transversal arms (4',4") or to said upper transversal arms (5',5").

5. Forecarriage (100) according to claim 3, wherein said shock absorber system (20) comprises an only shock absorber comprising a spring and a damper, said shock absorber being rotatably connected to said lower transversal arms (4',4") or to said upper transversal arms (5',5").

6. Forecarriage (100) according to any of preceding claims, wherein one of said spindles (11') is rotatably connected about a first rotation axis (V') to the first lateral upright (3') and the other of said spindles (11") is rotatably connected about a second swerve axis (V") to the second lateral upright (3").

7. Forecarriage (100) according to any of preceding claims, wherein said spindles (11',11") are rotatably connected to rods (16', 16") in turn connected to an arm (17) of the steering tube (10) through hinges.

8. Forecarriage (100) according to any of preceding claims, comprising two front wheels (300', 300") rotatably connected to the articulated kinematic rolling mechanism (1) through said spindles (11',11").

9. Forecarriage (100) according to any of preceding claims, wherein the rotating axes (R1',R1",R2',R2",R3',R3",R4',R4") of said first (6',6"), second (7',7"), third (8',8") and forth (9',9") connection points are each other parallels and in turn substantially parallel to the ground.

10. Forecarriage (100) according to claim 9, wherein said steering tube (10) crosses a plane (X) on which the rotating axes (R3',R3") of said third connection points (8',8") lie.

11. Motorvehicle (900) comprising a forecarriage (100) according to any of preceding claims.

## Patentansprüche

1. Vorgestell (100) zum Kippen eines Kraftfahrzeugs (900) mit zwei Vorderrädern, umfassend:
- einen gelenkigen kinematischen Rollmechanismus (1), umfassend:
- einen zentralen Block (2), der sich in einer Aufwärts-Abwärts-Richtung erstreckt und mit einem Rahmen (200) des Kraftfahrzeugs (900) verbindbar ist;
- eine erste und eine zweite seitliche Stütze (3', 3"), die sich jeweils in einer Aufwärts-Abwärts-Richtung erstrecken und mechanisch mit einer Drehachse (11', 11") der jeweiligen Vorderräder (300', 300") verbunden sind;
- einen ersten und einen zweiten unteren Querarm (4', 4"), von denen jeder drehbar an ersten Verbindungspunkten (6', 6") mit dem zentralen Block (2) bzw. an zweiten Verbindungspunkten (7',7") mit den seitlichen Stützen (3', 3") verbunden ist;
- einen ersten und einen zweiten oberen Querarm (5', 5"), von denen jeder drehbar an dritten Verbindungspunkten (8', 8") mit dem zentralen Block (2) bzw. an vierten Verbindungspunkten (9', 9") mit den seitlichen Stützen (3', 3") verbunden ist;
wobei der Abstand zwischen dem ersten Verbindungspunkt (6', 6") und den dritten Verbindungspunkten (8', 8") im Wesentlichen gleich dem Abstand zwischen den zweiten Verbindungspunkten (7', 7") und den vierten Verbindungspunkten (9', 9") ist;
wobei der Abstand zwischen dem ersten Verbindungspunkt (6', 6") und den zweiten Verbindungspunkten (7', 7") im Wesentlichen gleich dem Abstand zwischen den dritten Verbindungspunkten (8', 8") und den vierten Verbindungspunkten (9', 9") ist;
wobei der erste untere Querarm (4'), die erste seitliche Stütze (3'), der erste obere Querarm (5') und der zentrale Block (2) ein erstes gelenkiges Parallelogramm bilden und der zweite untere Querarm (4"), die zweite seitliche Stütze (3"), der zweite obere Querarm (5") und der zentrale Block (2) ein zweites gelenkiges Parallelogramm bilden;
ein Lenkrohr (10), das um eine Lenkachse (S) drehbar mit dem zentralen Block (2) verbunden ist, wobei die Lenkachse (S) auf einer zentralen Aufwärts-Abwärts-Ebene (M) liegt,
**dadurch gekennzeichnet, dass**
die ersten Verbindungspunkte (6', 6") axial ausgerichtet sind und die dritten Verbindungspunkte (8', 8") zueinander versetzt und in Bezug auf die zentrale Aufwärts-Abwärts-Ebene (M) versetzt sind, sodass sich die gelenkigen Parallelogramme in jeder Betriebsposition der gelenkigen kinematischen Rollvorrichtung (1) mindestens teilweise und so kreuzen, dass das Lenkrohr (10) zwischen den dritten Verbindungspunkten (8', 8") angeordnet ist.

2. Vorgestell (100) nach Anspruch 1, wobei die dritten Verbindungspunkte (8', 8") auf gegenüberliegenden Seiten der zentralen Aufwärts-Abwärts-Ebene (M) in Bezug auf die seitliche Stütze (3', 3") angeordnet sind, mit der sie durch die oberen Querarme (5', 5") verbunden sind.
drehbar

3. Vorgestell (100) nach Anspruch 1 oder 2, ferner umfassend ein Stoßdämpfersystem (20), das mit beiden unteren Querarmen (4', 4") oder mit beiden oberen Querarmen (5', 5") verbunden ist, das mindestens einen Stoßdämpfer umfasst.

4. Vorgestell (100) nach Anspruch 3, wobei das Stoßdämpfersystem (20) ferner einen Querträger (14) umfasst, der drehbar mit einem zentralen Block (2) und einem Paar Stoßdämpfer (15', 15") verbunden ist, wobei jeder der Stoßdämpfer (15', 15") ein elastisches Element (12', 12") und einen Dämpfer (13', 13") umfasst und unten mit den unteren Querarmen (4', 4") oder mit den oberen Querarmen (5', 5") drehbar verbunden ist.

5. Vorgestell (100) nach Anspruch 3, wobei das Stoßdämpfersystem (20) einen einzigen Stoßdämpfer umfasst, der eine Feder und einen Dämpfer umfasst, wobei der Stoßdämpfer mit den unteren Querarmen (4', 4") oder mit den oberen Querarmen (5',5") drehbar verbunden ist.

6. Vorgestell (100) nach einem der vorhergehenden Ansprüche, wobei eine der Drehachsen (11') um eine erste Rotationsachse (V') drehbar mit der ersten seitlichen Stütze (3') verbunden ist und die andere der Drehachsen (11") um eine zweite Schwenkachse (V") drehbar mit der zweiten seitlichen Stütze (3") verbunden ist.

7. Vorgestell (100) nach einem der vorhergehenden Ansprüche, wobei die Drehachsen (11', 11") drehbar mit Stangen (16', 16") verbunden sind, die ihrerseits mit einem Arm (17) des Lenkrohrs (10) über Scharniere verbunden sind.

8. Vorgestell (100) nach einem der vorhergehenden Ansprüche, das zwei Vorderräder (300', 300") umfasst, die über die Drehachsen (11', 11") drehbar mit dem gelenkigen kinematischen Rollmechanismus (1) verbunden sind.

9. Vorgestell (100) nach einem der vorhergehenden Ansprüche, wobei die Rotationsachsen (R1', R1", R2', R2", R3', R3", R4', R4") der ersten (6', 6"), zweiten (7', 7"), dritten (8', 8") und vierten (9', 9") Verbindungspunkte zueinander parallel und wiederum im Wesentlichen parallel zum Boden sind.

10. Vorgestell (100) nach Anspruch 9, wobei das Lenkrohr (10) eine Ebene (X) kreuzt, auf der die Rotationsachsen (R3', R3") der dritten Verbindungspunkte (8', 8") liegen.

11. Kraftfahrzeug (900), das ein Vorgestell (100) nach einem der vorhergehenden Ansprüche umfasst.

## Revendications

1. Avant-train (100) pour véhicule à moteur (900) inclinable ayant deux roues avant, comprenant :
- un mécanisme de roulement cinématique articulé (1) comprenant :
- un bloc central (2) s'étendant dans une direction haut-bas, pouvant être relié à un châssis (200) du véhicule à moteur (900) ;
- des premier et second montants latéraux (3', 3") s'étendant chacun dans une direction haut-bas et étant raccordés mécaniquement à une fusée (11', 11") de roues avant respectives (300', 300") ;
- des premier et second bras transversaux inférieurs (4', 4"), raccordés chacun en rotation respectivement au bloc central (2) en des premiers points de raccordement (6', 6") et auxdits montants latéraux (3', 3") en des deuxièmes points de raccordement (7', 7") ;
- des premier et second bras transversaux supérieurs (5', 5"), raccordés chacun en rotation respectivement au bloc central (2) en des troisièmes points de raccordement (8', 8") et auxdits montants latéraux (3', 3") en des quatrièmes points de raccordement (9', 9") ;
la distance entre ledit premier point de raccordement (6', 6") et lesdits troisièmes points de raccordement (8', 8") étant sensiblement égale à la distance entre lesdits deuxièmes points de raccordement (7', 7") et lesdits quatrièmes points de raccordement (9', 9") ;
la distance entre ledit premier point de raccordement (6', 6") et lesdits deuxièmes points de raccordement (7', 7") étant sensiblement égale à la distance entre lesdits troisièmes points de raccordement (8', 8") et lesdits quatrièmes points de raccordement (9', 9") ;
ledit premier bras transversal inférieur (4'), ledit premier montant latéral (3'), ledit premier bras transversal supérieur (5') et ledit bloc central (2) formant un premier parallélogramme articulé et ledit second bras transversal inférieur (4"), ledit second montant latéral (3"), ledit second bras transversal supérieur (5") et ledit bloc central (2) formant un second parallélogramme articulé ;
un tube de direction (10) raccordé en rotation, autour d'un axe de direction (S), au bloc central (2), ledit axe de direction (S) reposant sur un plan haut-bas central (M),
**caractérisé en ce que**
lesdits premiers points de raccordement (6', 6") sont alignés axialement et lesdits troisièmes points de raccordement (8', 8") sont décalés les uns des autres et décalés par rapport audit plan haut-bas central (M), de sorte que lesdits parallélogrammes articulés se croisent mutuellement au moins en partie dans chaque position de fonctionnement du mécanisme de roulement cinématique articulé (1) et de sorte que le tube de direction (10) soit agencé entre lesdits troisièmes points de raccordement (8', 8").

2. Avant-train (100) selon la revendication 1, dans lequel lesdits troisièmes points de raccordement (8', 8") sont agencés sur des côtés opposés du plan haut-bas central (M) par rapport au montant latéral (3', 3") auquel ils sont raccordés par lesdits bras transversaux supérieurs (5', 5").
en rotation

3. Avant-train (100) selon la revendication 1 ou 2, comprenant en outre un système d'absorbeur de chocs (20) raccordé auxdits deux bras transversaux inférieurs (4', 4") ou auxdits deux bras transversaux supérieurs (5', 5"), comprenant au moins un absorbeur de chocs.

4. Avant-train (100) selon la revendication 3, dans lequel ledit système d'absorbeur de chocs (20) comprend en outre une traverse (14) raccordée en rotation à un bloc central (2) et à une paire d'absorbeurs de chocs (15', 15"), chacun desdits absorbeurs de chocs (15', 15") comprenant un élément élastique (12', 12") et un amortisseur (13', 13") et étant raccordé en rotation en bas auxdits bras transversaux inférieurs (4', 4") ou auxdits bras transversaux supérieurs (5', 5").

5. Avant-train (100) selon la revendication 3, dans lequel ledit système d'absorbeur de chocs (20) comprend un seul absorbeur de chocs comprenant un ressort et un amortisseur, ledit absorbeur de chocs étant raccordé en rotation auxdits bras transversaux inférieurs (4', 4") ou auxdits bras transversaux supérieurs (5', 5").

6. Avant-train (100) selon l'une quelconque des revendications précédentes, dans lequel l'une desdites fusées (11') est raccordée en rotation autour d'un premier axe de rotation (V') au premier montant latéral (3') et l'autre desdites fusées (11") est raccordée en rotation autour d'un second axe de déviation (V") au second montant latéral (3").

7. Avant-train (100) selon l'une quelconque des revendications précédentes, dans lequel lesdites fusées (11', 11") sont raccordées en rotation à des tiges (16', 16") raccordées à leur tour à un bras (17) du tube de direction (10) par le biais de charnières.

8. Avant-train (100) selon l'une quelconque des revendications précédentes, comprenant deux roues avant (300', 300") raccordées en rotation au mécanisme de roulement cinématique articulé (1) par le biais desdites fusées (11', 11").

9. Avant-train (100) selon l'une quelconque des revendications précédentes, dans lequel les axes de rotation (R1', R1", R2', R2", R3', R3", R4', R4") desdits premiers (6', 6"), deuxièmes (7', 7"), troisièmes (8', 8") et quatrièmes (9', 9") points de raccordement sont mutuellement parallèles et à leur tour sensiblement parallèles au sol.

10. Avant-train (100) selon la revendication 9, dans lequel ledit tube de direction (10) croise un plan (X) sur lequel reposent les axes de rotation (R3', R3") desdits troisièmes points de raccordement (8', 8").

11. Véhicule à moteur (900) comprenant un avant-train (100) selon l'une quelconque des revendications précédentes.
